# EUROPEAN PATENT APPLICATION

(11) **EP 2 720 144 A2**
(43) Date of publication of application: **16.04.2014**
(21) Application number: 13188203.7
(22) Date of filing: 11.10.2013
(51) Int. Cl.: G06F 3/16, G09B 5/06, H04M 3/493

(54) **Voice-enabled documents for facilitating operational procedures**

(30) Priority: 11.10.2012 US 201213650034
(71) Applicant: Maltseff, Paul, Everett, WA 98203 (US); Byford, Roger, Everett, WA 98203 (US); Logan, James Randall, Everett, WA 98203 (US)
(72) Inventor: Maltseff, Paul, Everett, WA 98203 (US); Byford, Roger, Everett, WA 98203 (US); Logan, James Randall, Everett, WA 98203 (US)
(74) Representative: CBDL Patentanwälte

(57) **Abstract**

A voice-enabled document system facilitates execution of service delivery operations by eliminating the need for manual or visual interaction during information retrieval by an operator. Access to voice-enabled documents (400) can facilitate operations for mobile vendors, on-site or field-service repairs, medical service providers, food service providers, and the like. Service providers can access the voice-enabled documents by using a client device to retrieve the document, display it on a screen, and, via voice commands initiate playback of selected audio files containing information derived from text data objects selected from the document. Data structures (402, 406, 408) that are components of a voice-enabled document include audio playback files (406) and a logical association (408) that links the audio playback files (406) to user-selectable fields, and to a set of voice commands.

## Description

### TECHNICAL FIELD OF THE INVENTION

The present invention generally relates to the use of mobile computing devices to facilitate execution of operational procedures, and in particular to systems and methods for hands-free execution of operations that involve generating and accessing information stored in a non-transitory processor-readable medium.

### BACKGROUND OF THE INVENTION

There are many instances in which it is desirable to execute a set of procedures in accordance with documented information. For example, it is often beneficial to complete procedures using a checklist to ensure that steps are accomplished in a certain order, and to ensure all necessary steps are completed, without omissions. Using documented procedures allows best-known practices to be codified and honed over time to improve efficiency. Examples of procedures that have traditionally involved checklists include operating vehicles (e.g., aircraft procedures that use preflight checklists), logistics operations (e.g., product distribution systems, movement of military troops and supplies), equipment maintenance procedures (e.g., industrial field service, auto repair, home appliance repair, information technology support for hardware or software), assembly procedures, medical procedures, and inventory management.

Performing a procedure while also referring to associated documentation can be challenging, for example, if a task requires two hands, if gloves need to be worn, or if a task requires an operator's full attention, such as driving a vehicle. In such cases, it may require two people to complete the task - one to actually perform the procedure, and another to consult the documentation. Or, the procedure may take a long time to complete, because the operator periodically needs to suspend operations to consult the documentation, or to record progress, causing delays that tend to accumulate. In some instances, a need to exchange information during a procedure causes inefficiency, or poses a distraction to the operator, which can introduce a safety risk. The use of computer-generated voice instructions is beneficial in some of these situations. For example, smart phones typically come equipped with map navigation applications that use the global positioning system (GPS) to provide driving directions to a destination. Furthermore, some existing navigation applications include a feature that recites driving directions so that a driver need not look away from the road to receive the directions.

Other existing smart phone applications receive voice requests from a user, for example, keywords for input to a search function. Some applications further provide a vocal response, thus engaging the user in a sort of cyber conversation with a cyberpersonality representing the smart phone. However, information exchanged in these pseudo-conversations generally relates to core software for mobile devices such as maps, calendaring, manipulating contact lists, searching the Internet, and the like.

### DISCLOSURE OF THE INVENTION

A voice-enabled document system facilitates execution of service delivery operations by eliminating the need for manually or visually referring to documentation during the operations, thereby improving productivity and efficiency of service providers. Although current mobile device applications include some voice functions that facilitate hands-free operation, these applications are generally not directed to document processing. For example, existing capabilities fail to address reciting documented information or receiving spoken user input, in an interactive manner.

A voice-enabled document can include standard text or image data structures associated with conventional electronic documents. In addition, the voice enabled documents described herein include data structures such as audio playback files and a logical association that links the audio playback files to information extracted from the text and image data structures, and to a set of voice commands.

Data structures of a voice-enabled document can be interactively generated by a service delivery provider using a client device such as a mobile tablet computer or mobile smart phone, or they can be produced in advance of service delivery operations. Generating the data structures of a voice-enabled document entails extracting information from user-selectable fields within the document, as text data objects, transforming the text data objects into audio playback files, and logically associating voice commands with the audio playback files. Once the voice-enabled document is generated, it can be sent to a networked destination such as another service provider or a centralized processor-based server system.

Providing access to voice-enabled documents can facilitate operations for service businesses, such as, for example, mobile vendors, on-site or field-service repairs, medical service providers, food service providers, and the like. To use voice-enabled documents, the service business can maintain a centralized processor-based server system, produces and stores voice-enabled documents within the server system, provides voice-enabled networked client devices to the service providers, and programs the client devices with voice communication capability. Service providers can access the voice-enabled documents by using a client device to retrieve the document, display the voice-enabled document on a screen, and, via voice commands (or backup touch screen commands) initiate playback of selected audio playback files. The voice-enabled document thus allows a service provider to listen to the information contained in the document instead of having to read the document.

A method of operation in a processor-based system of producing voice-enabled documents, the processor-based system including at least one processor and at least one non-transitory processor-readable medium communicatively coupled to the at least one processor, may be summarized as including extracting a number of text data objects from an electronic document, by the at least one processor; identifying at least some of the extracted text data objects as user-selectable fields; and for each of the user-selectable fields: transforming the text data object of the respective user-selectable field to an audio playback file, by the at least one processor; storing at least one voice command name for the respective user-selectable field to the at least one non-transitory processor-readable medium; and logically associating the at least one voice command name for the respective user-selectable field as a trigger with the audio playback file for the respective user-selectable field, by the at least one processor.

The method of operation in a processor-based system of producing voice-enabled documents, the processor-based system including at least one processor and at least one non-transitory processor-readable medium communicatively coupled to the at least one processor, may further include storing the audio playback file to the at least one non-transitory processor-readable medium, displaying the image data on a display screen and visually emphasizing the user-selectable fields, and sending the voice-enabled document to a networked destination.

The extracting may include acquiring a digital image of the electronic document, parsing digital image data into segments, and using optical character recognition (OCR) techniques, decoding text-containing segments of the image data. The processor-based system may include a mobile computing device, including one or more of a smart phone, a tablet computer, or a laptop computer selectively communicatively coupled to the non-transitory processor-readable medium via a network, in which the mobile device receives voice input from a user. The identifying the at least some of the extracted text data objects as user-selectable fields may include accepting input, interactively, from a user. The logically associating the at least one voice command name for the user-selectable field may include assigning hyperlinks to the audio playback file. The displaying the image data on the display screen may include displaying the image data on a touch screen. The transforming the text data object of the respective user-selectable field to the audio playback file may include transforming the text data object of the respective user-selectable field to a corresponding MP3 file. The sending the voice-enabled document may include sending the voice-enabled document in the form of an electronic mail message, or in the form of an attachment to an electronic mail message.

A method of operation in a processor-based system of accessing information in a voice-enabled document, the processor-based system including at least one processor and at least one non-transitory processor-readable medium communicatively coupled to the at least one processor, may be summarized as including causing an image of a digital image of an electronic document to appear on a display screen, the electronic document including a number of user-selectable fields; receiving a voice command input by the at least one processor, the voice command input indicative of a selection of one of the user-selectable fields; and initiating a playback of an audio playback file logically associated with the selected user-selectable field, by the at least one processor.

The method of operation in a processor-based system of accessing information in a voice-enabled document, the processor-based system including at least one processor and at least one non-transitory processor-readable medium communicatively coupled to the at least one processor may further include repeating the receiving and the initiating, in accordance with commands from a user, and detecting a user touching the user-selectable fields on a touch screen. The initiating the playback of the audio playback file may include playing back an MP3 file using an MP3 player.

A method of accessing data from a voice-enabled document within a processor-based system, the processor-based system including at least one processor and at least one non-transitory processor-readable medium communicatively coupled to the at least one processor, may be summarized as including retrieving the voice-enabled document from the at least one non-transitory processor-readable medium, in response to a voice command received via a mobile electronic device that is responsive to voice input; displaying on a display screen of the mobile electronic device image data associated with the voice-enabled document, the displayed image data including visually emphasized areas to indicate one or more user-selectable fields; recognizing at least one voice command name associated with a user-selectable field; and initiating playback of an audio playback file by the at least one processor, in accordance with a logical association between the user-selectable field and the audio playback file.

The method of accessing data from a voice-enabled document within a processor-based system, the processor-based system including at least one processor and at least one non-transitory processor-readable medium communicatively coupled to the at least one processor may further include processing the voice input using a voice command interpreter, and repeating the recognizing and the initiating, in accordance with further voice commands. The initiating playback of the audio playback file may include initiating playback of an MP3 file using an MP3 player. The retrieving the voice-enabled document in response to the voice command received via a mobile electronic device may include retrieving the voice-enabled document via one or more of a smart phone, a tablet computer, or a laptop computer. The logical association may include one or more of a mapping table, a look-up table, a linked list, and a pointer.

A non-transitory computer-readable medium may be summarized as including data structures associated with voice-enabled electronic documents, in which the data structures include: image data representing the voice-enabled electronic document for display on an electronic display screen; at least one voice command name associated with each of a plurality of embedded document fields; and a logical association between each voice command name and an audio data file, such that voice recognition of a voice command name triggers an audible presentation of the logically associated audio data file. Each audio data file may be selected by touching a location of a display screen, the location containing an electronic hyperlink to the audio data file. Selection of the voice command name may use voice recognition.

A system for producing voice-enabled documents, may be summarized as including: a non-transitory processor-readable medium; a digital camera that captures an image of an electronic document and stores associated image data in the non-transitory processor-readable medium; at least one processor programmed to extract text data objects from the image, and to produce corresponding audio data files for storage in the non-transitory processor-readable medium; a display that presents the text data objects as user-selectable fields; and a logical association generator that logically assigns one or more voice command names to each user-selectable field, and further associates the voice command names with corresponding audio data files. The processor may include a parsing unit that decodes the image data into parsed segments; and an optical character recognition (OCR) unit programmed to transform data within text-containing segments of the image into text data objects. The text data objects may be interactively selected by a user. The camera, processor, and display may be parts of a mobile processor-based device.

A voice-enabled document access system, may be summarized as including: a non-transitory processor-readable medium; a mobile processor-based device selectively communicatively coupled to a network, the mobile processor-based device programmed to communicate via the network with the non-transitory processor-readable medium in which are stored one or more voice-enabled documents, each voice-enabled document containing an image of an electronic document and a logical association; an interactive display that presents to a user a voice-enabled document along with associated user-selectable fields; a logical association saved in the non-transitory processor-readable medium that associates digital audio files with user-selectable fields; and an audio player programmed to play back the digital audio files according to the logical association, upon selection of a user-selectable field. The logical association may include one or more of a mapping table, a look-up table, a linked list, and a pointer, and one or more voice command names associated with each selectable field. The display may be a touch screen and the selection of a user-selectable field may be by manual touch screen input. The voice-enabled document access system may further include a microphone and one or more audio speakers that receive input from the audio player. The interactive display may be responsive to voice commands received via the microphone. The audio speakers may be implemented as a headset that connects to the mobile device via an audio port, as a Bluetooth™ device that receives input from the audio player via a wireless connection, or as a headset that contains the mobile device. The user-selectable fields may be implemented as hyperlinks within the voice-enabled document on the display, in which selection of a hyperlink may activate playback of an audio file.

A method of operation using voice-enabled documents, may be summarized as including: producing voice-enabled documents for storage in a non-transitory processor-readable medium; providing to one or more users mobile electronic devices having voice input capability and audio playback capability; providing a network connecting the mobile electronic devices to the non-transitory processor-readable medium, to allow access to the voice-enabled documents; and programming the mobile devices with instructions for retrieving the voice-enabled documents, and receiving information from within the voice-enabled documents by audio playback, in response to voice commands. The users may include one or more of a provider of a vendor, a health care provider of a health care service, a technician of a repair service, or a food service provider of a restaurant service. The voice-enabled documents may include one or more of checklist procedures or recipes.

### BRIEF DESCRIPTION OF THE DRAWINGS

- Fig. 1: is a schematic view of a networked service computing environment according to one illustrated embodiment, including a server system and a plurality of end users (service providers), each end user having associated processor-based devices to provide communications with the server system.
- Fig. 2: is a functional block diagram of a processor-based server networked to one of the end user processor-based devices, according to one illustrated embodiment.
- Fig. 3: is a high-level flow diagram showing a method of operation of a service that employs voice-enabled documents to allow users hands-free access to information, according to one illustrated embodiment.
- Fig. 4: is a schematic diagram showing data structures of an exemplary voice-enabled document in the form of a business invoice for use in a service system, according to one illustrated embodiment.
- Fig. 5: is an image of a business invoice used as an example of a voice-enabled document, as described herein.
- Fig. 6: illustrates an exemplary logical association that links voice command names and user-selectable fields with corresponding audio playback files pertaining to the information contained in the business invoice shown in Figure 4.
- Fig. 7: is a screen print of an end user's mobile device display showing the voice-enabled sales invoice document and various highlighted user-selectable fields.
- Fig. 8: is a flow diagram showing a first high level method of accessing a voice-enabled document using voice commands, according to one illustrated embodiment.
- Fig. 9: is a flow diagram showing a method of operation of producing a voice-enabled document, according to one illustrated embodiment.

### DESCRIPTION OF PREFERRED EMBODIMENTS

In the drawings, identical reference numbers identify similar elements or acts. The sizes and relative positions of elements in the drawings are not necessarily drawn to scale. For example, the shapes of various elements and angles are not drawn to scale, and some of these elements are arbitrarily enlarged and positioned to improve drawing legibility. Further, the particular shapes of the elements as drawn are not intended to convey any information regarding the actual shape of the particular elements, and have been solely selected for ease of recognition in the drawings.

In the following description, certain specific details are set forth in order to provide a thorough understanding of various disclosed embodiments. However, one skilled in the relevant art will recognize that embodiments may be practiced without one or more of these specific details, or with other methods, components, materials, etc. In other instances, well-known structures associated with computer systems, server computers, and/or communications networks have not been shown or described in detail to avoid unnecessarily obscuring descriptions of the embodiments.

Unless the context requires otherwise, throughout the specification and claims which follow, the word "comprise" and variations thereof, such as "comprises" and "comprising," are to be construed in an open, inclusive sense that is as "including, but not limited to."

Reference throughout this specification to "one embodiment" or "an embodiment" means that a particular feature, structure or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

As used in this specification and the appended claims, the singular forms "a," "an," and "the" include plural referents unless the content clearly dictates otherwise. It should also be noted that the term "or" is generally employed in its sense including "and/or" unless the content clearly dictates otherwise.

The headings and Abstract of the Disclosure provided herein are for convenience only and do not interpret the scope or meaning of the embodiments.

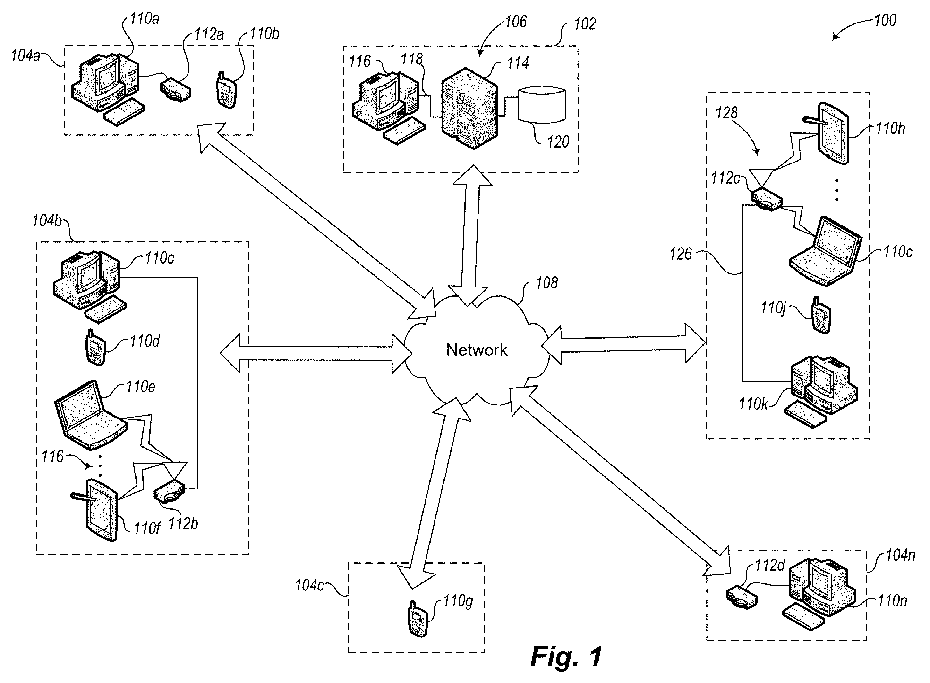

Figure 1 shows a networked environment 100 in which an exemplary vendor is managed by a vendor entity 102 to deploy a plurality of providers 104a-104n (only five shown, collectively 104), according to one illustrated embodiment. The vendor entity 102 operates one or more vendor systems 106. The vendor system(s) 106 is communicatively coupled or communicatively coupleable via one or more networks 108 to one or more provider-associated processor-based devices 110a-110n (eleven shown, collectively 110) associated with the providers 104a-104n (three shown, collectively 104).

The vendor entity 102 may take any of a variety of forms. For example, the vendor entity 102 may take the form of an individual or business that provides products or raw materials (i.e., goods) and/or services to individuals, residences, businesses, educational institutions, hospitals, government installations, and the like. The vendors may include providing products or services via providers 104 (e.g., vehicle drivers for a vendor, health care providers of a health care service, technicians of a repair service, food service providers of a restaurant service, etc.) to any number of destinations of various types. The vendor entity 102 may dispatch providers 104 on a random, as-needed basis, or on a regular schedule.

The providers 104 may take a variety of forms, for example, drivers of delivery vehicles, mail trucks, rail cars, or moving vans, florists, building contractors, health care practitioners, therapists, etc. In many instances, the providers 104 will involve the use of mobile delivery units involving some type of vehicle such as a truck, van, freight train, container ship, or airplane. Alternatively, the providers 104 can be individuals providing services to other individuals (e.g., medical practitioners visiting patients in hospitals, nursing homes, or residences). As a further alternative, the providers 104 can be businesses or individuals providing maintenance services to other businesses or individuals, such as computer repair technicians or equipment repair service personnel who maintain equipment at a user site.

Each provider 104 may be logically or otherwise associated with one or more provider-associated processor-based devices 110a-110n, at least when interacting with the vendor. The provider-associated processor-based devices 110 may take any of a large variety of forms, including but not limited to personal computers (e.g., desktop computers 110a, 110c, 110k, or laptop computers 110e, notebook computers 110i, tablet computers 110f, 110h, smart phones 110b, 110d, 110g, 110j, workstation computers 110n, and/or mainframe computers (not shown), and the like.

Notably, some providers 104c, 104n may be logically associated with a single provider-associated processor-based device 110g, 110n, respectively. In many instances, each respective provider 104a, 104b, 104d may be logically associated with two or more processor-based devices. The logical association may be established via an account record or other data structure which may be set up when the provider 104 registers with the vendor entity 102. For example, an account may be set up for the provider 104, which specifies device address information (e.g., uniform resource locator (URL), phone number, SIM mobile subscriber identifier, mobile equipment identifier, MAC address) for one or more provider-associated processor-based devices 110. The logical association may be established on an ad hoc basis, for example in response to a provider 104 logging into a portal (e.g., Web portal) using one or more applications (e.g., browser) executed on or by one of the provider-associated processor-based devices 110. Such examples may include the entering of a user name and a password by the provider 104 and verification of the user name and password with a provider account by the vendor systems 106. Such ad hoc logical associations may be temporary, and may move from one provider-associated processor-based device 110 to another, as the particular provider 104 moves.

The provider-associated processor-based devices 110 are capable of communication, for example via one or more networks 108 (e.g., Wide Area Networks, Local Area Networks), for instance packet switched communications networks, such as the Internet, Worldwide Web portion of the Internet, extranets, intranets, and/or various other types of telecommunications networks such as cellular phone and data networks, and plain old telephone system (POTS) networks. The type of communications infrastructure should not be considered limiting. One or more communications interface devices 112a-112d (four shown, collectively 112) may provide communications between the provider-associated processor-based device(s) 110 and the network(s) 108. The communications interface devices 112 may take any of a wide variety of forms, including modems (e.g., DSL modem, cable modem), routers, network switches, and/or bridges, etc. The communications interface device 112 can communicate with the provider-associated processor-based device 110 using a wired communication channel 126, a wireless communication channel 128, or combinations thereof.

The vendor system 106 operates so as to facilitate delivery of products and services using the provider-associated processor-based devices 110 of the providers 104. The vendor system 106 may have one or more vendor processor-based servers 114 (only one illustrated) to provide electronic communications either externally from, and/or internally within, the vendor entity 102. To handle the load of multiple providers 104, the vendor system 106 will typically have more than one vendor processor-based server 114. The vendor system 106 may include one or more terminals or personal computers 116 (only one shown), communicatively coupled to the vendor processor-based server 114 via one or more wired or wireless networks 118 (only one shown). The terminals or personal computers 116 allow input and output by an end user (e.g., employee or contractor of the vendor entity 102).

The vendor system 106 includes at least one non-transitory processor-readable storage medium 120 (e.g., hard drive, RFID, RAM). The non-transitory processor-readable storage medium 120 stores a variety of information about the goods and services handled by the providers 104, facilitating the automated tracking of deliveries being made by the providers 104, and optionally the fostering of associated communications, for instance, including the transmission of electronic correspondence including electronic messages and electronic replies or responses thereto.

In most implementations, voice-enabled documents handled by the providers 104 can be created and stored by the vendor processor-based server 114 and/or non-transitory processor-readable storage medium 120, for instance, in a voice-enabled document database or other data structure(s). The vendor processor-based server 114 may, from time to time, import or write voice-enabled documents to the vendor database stored on the computer- or processor-readable storage medium 120. The vendor processor-based server 114 may, from time to time, retrieve or extract documents, including voice-enabled documents, from the available database stored on the non-transitory processor-readable storage medium 120. For example, the vendor processor-based server 114 may retrieve documents, including voice-enabled documents, handled by the providers 104 in response to a query. For example, the vendor processor-based server 114 may retrieve the documents handled by the providers 104 in response to a query by a customer. While denominated as a "vendor" database, such a database is not necessarily only populated with information about current deliveries or current customers. For example, customers who are no longer actively receiving deliveries may still be represented in the vendor database. Such customers may, for example, remain represented in the vendor database until they request removal and/or close their account with the vendor.

Advantageously, voice-enabled documents handled by providers 104 are stored by the vendor processor-based server 114 and/or non-transitory processor-readable storage medium 120, for instance, in a "completed deliveries" database or other data structure(s). The vendor processor-based server 114 may, from time to time, import or write end user aspects, attributes or characteristics to the successfully paired database stored on the non-transitory processor-readable storage medium 120. The vendor processor-based server 114 may, from time to time, retrieve or extract the voice-enabled documents from the distribution clients database stored on the non-transitory processor-readable storage medium 120. For example, the vendor processor-based server 114 may retrieve the voice-enabled documents handled by the providers 104 in response to a query. For example, the vendor processor-based server 114 may retrieve the voice-enabled documents handled by the providers 104 in response to a query by the vendor entity 102 when analyzing efficiency of the vendor.

While illustrated as a single non-transitory processor-readable storage medium 120, in many implementations the non-transitory processor-readable storage medium 120 may constitute a plurality of non-transitory storage media. The plurality of non-transitory storage media may be commonly located at a common location, or distributed at a variety of remote locations. Thus, the available end user clients database and/or the successfully matched database may be implemented in one, or across more than one, non-transitory computer- or processor-readable storage media. Such database(s) may be stored separately from one another on separate non-transitory processor-readable storage medium 120 or may be stored on the same non-transitory processor-readable storage medium 120 as one another. The non-transitory processor-readable storage medium 120 may be co-located with the vendor processor-based server 114, for example, in the same room, building or facility. Alternatively, the non-transitory processor-readable storage medium 120 may be located remotely from the vendor processor-based server 114, for example in a different facility, city, state or country. Electronic or digital information, files or records or other collections of information may be stored at specific locations in non-transitory processor-readable media 120, thus are logically addressable portions of such media, which may or may not be contiguous.

While Figure 1 illustrates a representative networked environment 100, typical networked environments may include many additional, or fewer, computer systems and entities. The concepts taught herein may be employed in a similar fashion with more (or less) populated networked environments than that illustrated.

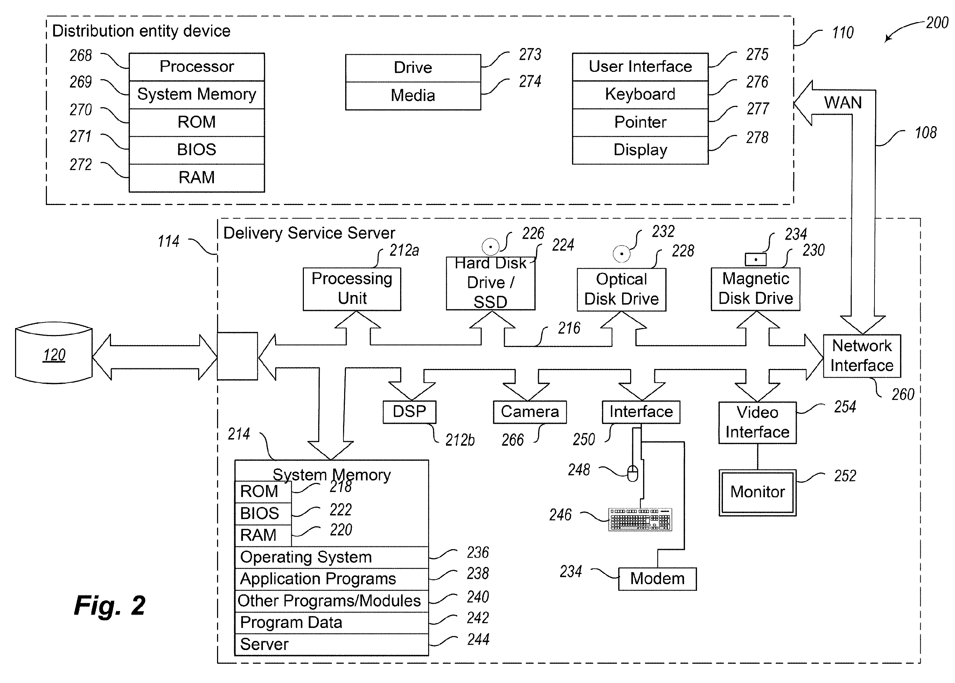

Figure 2 and the following discussion provide a more detailed description of a suitable networked environment 200 in which the various illustrated embodiments can be implemented. The networked environment 200 can be regarded as a subset of the overall networked environment 100. Although not required, the embodiments will be described in the general context of computer-executable instructions, such as program application modules, objects, or macros stored on computer- or processor-readable media and executed by a computer or processor. Those skilled in the relevant art will appreciate that the illustrated embodiments, as well as other embodiments, can be practiced with other system configurations and/or other computing system configurations, including hand-held devices (e.g., smart phones, tablet devices, netbooks, personal digital assistants), multiprocessor systems, microprocessor-based or programmable consumer electronics, personal computers ("PCs"), networked PCs, mini computers, mainframe computers, and the like. The embodiments can be practiced in distributed computing environments where tasks or modules are performed by remote processing devices, which are linked through a communications network. In a distributed computing environment, program modules may be located in both local and remote medium storage devices or media.

Figure 2 shows a networked environment 200 comprising one or more of the vendor processor-based servers 114 (only one illustrated) and at least one associated non-transitory processor-readable storage medium 120 (only one illustrated). The associated non-transitory processor-readable storage medium 120 is communicatively coupled to the vendor processor-based server(s) 114 via one or more communications channels, for example, one or more parallel cables, serial cables, or wireless channels capable of high speed communications, for instance, via one or more of FireWire®, Universal Serial Bus® (USB), Thunderbolt®, or Gigabyte Ethernet®.

The networked environment 200 also comprises one or more end user client devices such as provider-associated processor-based devices 110 (only one illustrated). The provider-associated processor-based devices 110 are communicatively coupled to the vendor processor-based server(s) 114 by one or more communications channels, for example, by wireless channels such as those listed above, or one or more wide area networks (WANs) 108, for instance the Internet or Worldwide Web portion thereof. Provider-associated processor-based devices 110 may take the form of mobile electronic devices such as smart phones, notebook computers, or tablet computers.

In operation, the provider-associated processor-based devices 110 typically function as a client to the vendor processor-based server 114. In operation, the vendor processor-based server(s) 114 typically functions as a server to receive requests from the provider-associated processor-based devices 110, and to provide documentation, such as delivery voice-enabled documents, to the providers. The networked environment 200 may employ other computer systems and network equipment, for example, additional servers, proxy servers, firewalls, routers and/or bridges. The vendor processor-based server(s) 114 will at times be referred to in the singular herein, but this is not intended to limit the embodiments to a single device since in typical embodiments there may be more than one vendor processor-based server(s) 114 involved. Unless described otherwise, the construction and operation of the various blocks shown in Figure 2 are of conventional design. As a result, such blocks need not be described in further detail herein, as they will be understood by those skilled in the relevant art.

The vendor processor-based server(s) 114 may include one or more processing units 212a, 212b (collectively 212), a system memory 214 and a system bus 216 that couples various system components, including the system memory 214 to the processing units 212. The processing units 212 may be any logic processing unit, such as one or more central processing units (CPUs) 212a, digital signal processors (DSPs) 212b, application-specific integrated circuits (ASICs), field programmable gate arrays (FPGAs), etc. The system bus 216 can employ any known bus structures or architectures, including a medium bus with a medium controller, a peripheral bus, and/or a local bus. The system memory 214 includes read-only medium ("ROM") 218 and random access medium ("RAM") 220. A basic input/output system ("BIOS") 222, which can form part of the ROM 218, contains basic routines that help transfer information between elements within the vendor processor-based server(s) 114, such as during start-up.

The vendor processor-based server(s) 114 may include a hard disk drive 224 for reading from and writing to a hard disk 226, an optical disk drive 228 for reading from and writing to removable optical disks 232, and/or a magnetic disk drive 230 for reading from and writing to magnetic disks 234. The optical disk 232 can be a CD-ROM, while the magnetic disk 234 can be a magnetic floppy disk or diskette. The hard disk drive 224, optical disk drive 228 and magnetic disk drive 230 may communicate with the processing unit 212 via the system bus 216. The hard disk drive 224, optical disk drive 228 and magnetic disk drive 230 may include interfaces or controllers (not shown) coupled between such drives and the system bus 216, as is known by those skilled in the relevant art. The disk drives 224, 228 and 230, and their associated processor-readable media 226, 232, 234, provide nonvolatile storage of computer-readable instructions, data structures, program modules and other data for the vendor processor-based server 114. Although the depicted vendor processor-based server(s) 114 is illustrated employing a hard disk drive 224, optical disk drive 228 and magnetic disk drive 230, those skilled in the relevant art will appreciate that other types of processor-readable media that can store data accessible by a processor-based device may be employed, such as solid state disks (SSD), hybrid (solid state / hard disk) drives, WORM drives, RAID drives, magnetic cassettes, flash medium cards, audio compact disks (CD), digital video disks (DVD), Blu-ray discs (BD), Bernoulli cartridges, RAMs, ROMs, smart cards, etc.

Program modules can be stored in the system memory 214. Such program modules can include an operating system 236, one or more application programs 238, other program modules 240 and program data 242. Application programs 238 may include instructions that cause the processor(s) 212 to receive and automatically store aspect, attribute, or characteristic information about the providers 104 (Figure 1) to the associated non-transitory processor-readable storage medium 120. Application programs 238 may also include instructions that cause the processor(s) 212 to generate, store, or retrieve data structures associated with voice-enabled documents. The application programs 238 may additionally include instructions that cause the processor(s) 212 to send or receive voice-enabled documents to or from provider-associated processor-based devices 110, including mobile devices. Such is described in detail herein with reference to the various flow diagrams. The application programs 238 may further include instructions that cause the processor(s) 212 to recognize spoken terms as indicative of a user selection of a user selectable voice actuatable field in a voice enabled document, and to cause the processor(s) 212 to audibly provide information contained in, or associated with, the corresponding voice actuatable field. For example, the application programs 238 may cause the processor(s) 212 to recognize a spoken term "delivery address" to indicate a selection of a delivery address field of an invoice, and in response audibly announce the specific address in the delivery address field of the specific instance of the invoice.

The application programs 238 may further include instructions that cause the processor(s) 212 to track the location of providers, especially mobile providers. The instructions may also track account transaction information or customer information extracted from voice-enabled documents for use in, for example, compiling business statistics or improving security or efficiency of service delivery.

Application programs 238 may include instructions that cause the processor(s) 212 to automatically control access to certain information based on vendor-specific or provider-specific criteria. For example, the instructions may limit other providers from seeing information about a specific provider, unless the specific provider has previously identified the other provider to receive access to the information. For example, maintaining confidentiality of voice-enabled documents is particularly relevant to medical providers who regularly handle patient medical records that are subject to privacy regulations... Application programs 238 may include instructions that cause the processor(s) 212 to automatically send, transmit, transfer, or otherwise provide electronic communications (e.g., messages, replies or responses) between different providers 104. For example, a primary care doctor can communicate messages, test results, or images to a specialist in the form of voice-enabled documents. Such may include sending, transmitting, transferring or otherwise providing access to electronic or digital messages, with or without images. Such may facilitate seamless contact and establishment of a medical diagnosis or other service customer status. Application programs 238 may include instructions that cause the processor(s) 212 to automatically establish, maintain, update or record delivery information pertaining to goods and services delivered by various providers. Such may include a representation of updated information in voice-enabled document data structures. Such may also include updating records or forms saved as voice-enabled documents in a database or table.

Application programs 238 may include instructions that cause the processor(s) 212 to automatically establish, maintain, update or record ownership information with respect to voice-enabled documents, and their associated electronic files or stored data, as well as privileges, permissions or authorizations to perform various acts on such voice-enabled documents and associated files such acts including viewing, modifying, annotating, extracting, importing, retrieving, and/or deleting. Application programs 238 may even further include instructions to create entries in and/or query one or more databases which store information or data about providers or customers, regardless of the location at which those electronic or digital documents or data are stored.

Other program modules 240 may include instructions for handling security such as password or other access protection and communications encryption.

The system memory 214 may also include communications programs, for example, a network server 244 that causes the vendor processor-based server 114 to serve electronic information or files via the Internet, intranets, extranets, telecommunications networks, or other networks as described below. The network server 244 in the depicted embodiment is markup language based, such as Hypertext Markup Language (HTML), Extensible Markup Language (XML) or Wireless Markup Language (WML), and operates with markup languages that use syntactically delimited characters added to the data of a document to represent the structure of the document. A number of suitable severs may be commercially available such as those from Mozilla, Google, Microsoft and Apple Computer.

While shown in Figure 2 as being stored in the system memory 214, the operating system 236, application programs 238, other program modules 240, program data 242, and network server 244 can be stored on the hard disk 226 of the hard disk drive 224, the optical disk 232 of the optical disk drive 228 and/or the magnetic disk 234 of the magnetic disk drive 230.

An operator can enter commands and information into the vendor processor-based server(s) 114 through input devices such as a touch screen or keyboard 246 and/or a pointing device such as a mouse 248, and/or via a graphical user interface. Other input devices can include a microphone, joystick, game pad, tablet, scanner, etc. These and other input devices are connected to one or more of the processing units 212 through an interface 250 such as a serial port interface that couples to the system bus 216, although other interfaces such as a parallel port, a game port or a wireless interface, or a universal serial bus ("USB") can be used. A monitor 252 or other display device is coupled to the system bus 216 via a video interface 254, such as a video adapter. The vendor processor-based server(s) 114 can include other output devices, such as speakers, printers, etc. One or more cameras 266 can be coupled to the system bus 216 to supply digital image data.

The vendor processor-based server(s) 114 can operate in a networked environment 200 using logical connections to one or more remote computers and/or devices. For example, the vendor processor-based server(s) 114 can operate in a networked environment 200 using logical connections to one or more provider-associated processor-based devices 110. Communications may be via a wired and/or wireless network architecture, for instance, wired and wireless enterprise-wide computer networks, intranets, extranets, and/or the Internet. Other embodiments may include other types of communications networks including telecommunications networks, cellular networks, paging networks, and other mobile networks. There may be any variety of computers, switching devices, routers, bridges, firewalls and other devices in the communications paths between the vendor processor-based server(s) 114 and the provider-associated processor-based devices 110.

The provider-associated processor-based devices 110 will typically take the form of end user processor-based devices, for instance, personal computers (e.g., desktop or laptop computers), netbook computers, tablet computers, smart phones, personal digital assistants (PDAs), workstation computers and/or mainframe computers, and the like, executing appropriate instructions. These provider-associated processor-based devices 110 may be communicatively coupled to one or more server computers. For instance, provider-associated processor-based devices 110 may be communicatively coupled externally via one or more provider server computers (not shown), which may implement a firewall. The provider-associated processor-based devices 110 may execute a set of server instructions to function as a server for a number of provider-associated processor-based device 110 (i.e., clients) communicatively coupled via a LAN at a facility or site, and thus act as intermediaries between the provider-associated processor-based devices 110 and the vendor processor-based server(s) 114. The provider-associated processor-based devices 110 may execute a set of client instructions to function as a client of the server computer(s), which are communicatively coupled via a WAN.

The provider-associated processor-based devices 110 may include one or more processing units 268, system storage media 269 and a system bus (not shown) that couples various system components including the system storage media 269 to the processing unit 268. The provider-associated processor-based devices 110 will at times each be referred to in the singular herein, but this is not intended to limit the embodiments to a single end user client processor-based system 110. In typical embodiments, there may be more than one provider-associated processor-based device 110 and there will likely be a large number of provider-associated processor-based devices 110.

The processing unit 268 may be any logic processing unit, such as one or more central processing units (CPUs), digital signal processors (DSPs), application-specific integrated circuits (ASICs), field programmable gate arrays (FPGAs), etc. Non-limiting examples of commercially available logic processing units include, for example, a Pentium®, Xeon®, Core®, or Atom® series microprocessor from Intel Corporation, or an A4, A5, or A6 mobile series microprocessor from Apple, Inc. Unless described otherwise, the construction and operation of the various blocks of the provider-associated processor-based device 110 shown in Figure 2 are of conventional design. As a result, such blocks need not be described in further detail herein, as they will be understood by those skilled in the relevant art.

The system bus can employ any known bus structures or architectures, including a medium bus with medium controller, a peripheral bus, and a local bus. The system storage media 269 includes read-only medium ("ROM") 270 and random access medium ("RAM") 272. A basic input/output system ("BIOS") 271, which can form part of the ROM 270, contains basic routines that help transfer information between elements within the end user client computer devices 110, such as during start-up.

The provider-associated processor-based device 110 may also include one or more media drives 273, e.g., a hard disk drive, magnetic disk drive, WORM drive, and/or optical disk drive, for reading from and writing to non-transitory processor-readable storage media 274, e.g., hard disk, optical disks, and/or magnetic disks. The non-transitory processor-readable storage media 274 may, for example, take the form of removable media. For example, hard disks may take the form of a Winchester drive, and optical disks can take the form of CD-ROMs, while magnetic disks can take the form of magnetic floppy disks or diskettes. The media drive(s) 273 communicate with the processing unit 268 via one or more system buses. The media drives 273 may include interfaces or controllers (not shown) coupled between such drives and the system bus, as is known by those skilled in the relevant art. The media drives 273, and their associated non-transitory processor-readable storage media 274, provide nonvolatile storage of computer readable instructions, data structures, program modules and other data for the end user client processor-based devices 110. Although described as employing non-transitory processor-readable storage media 274 such as hard disks, optical disks and magnetic disks, those skilled in the relevant art will appreciate that provider-associated processor-based device 110 may employ other types of non-transitory computer-readable storage media that can store data accessible by a computer, such as magnetic cassettes, flash medium cards, digital video disks ("DVD"), Bernoulli cartridges, RAMs, ROMs, smart cards, etc. Data or information, for example, electronic or digital files or data or metadata related to such can be stored in the non-transitory processor-readable storage media 274.

Program modules, such as an operating system, one or more application programs, other programs or modules and program data, can be stored in the system storage media 269. Program modules may include instructions for accessing a Web site, extranet site or other site or services (e.g., Web services) and associated WebPages, other pages, screens or services hosted by the vendor processor-based server 114.

In particular, the system storage media 269 may include communications programs that permit the provider-associated processor-based device 110 to exchange electronic or digital information or files or data or metadata with the vendor processor-based server 114. The communications programs may, for example, be a Web client or browser that permits the provider-associated processor-based device 110 to access and exchange information, files, data and/or metadata with sources such as Web sites of the Internet, corporate intranets, extranets, or other networks. Such may require that the provider-associated processor-based device 110 have sufficient right, permission, privilege or authority for accessing a given Web site, for example, one hosted by the vendor sever computer system(s) 114. The browser may, for example, be markup language based, such as Hypertext Markup Language (HTML), Extensible Markup Language (XML) or Wireless Markup Language (WML), and may operate with markup languages that use syntactically delimited characters added to the data of a document to represent the structure of the document.

While described as being stored in the system storage media 269, the operating system, application programs, other programs/modules, program data and/or browser can be stored on the computer-readable storage media 274 of the media drive(s) 273. An operator can enter commands and information into the provider-associated processor-based device 110 via a user interface 275 through input devices such as a touch screen or keyboard 276 and/or a pointing device 277 such as a mouse or a stylus. Voice input can be received from a user by a microphone such as a condenser microphone, headset microphone, or a Bluetooth®-type ear-mounted microphone that can be wirelessly coupled to the provider-associated processor-based system 110. Other input devices can include a joystick, game pad, tablet, scanner, etc. These and other input devices are connected to the processing unit 268 through an interface such as a serial port interface that couples to the system bus, although other interfaces such as a parallel port, a game port or a wireless interface or a universal serial bus ("USB") can be used. Output devices such as a display or monitor 278 may be coupled to the system bus via a video interface, such as a video adapter. The provider-associated processor-based device 110 can include other output devices, such as printers, audio speakers, headset output ports, USB ports that allow output to memory sticks or USB-compatible electronic devices, etc.

Application programs stored on the computer-readable storage media 274 can include, for example, commercially available voice recognition software, as well as a program for interactive execution of a method of producing a voice-enabled document as described herein. Such an application program allows a provider 104 to enter voice-enabled documents into a voice-enabled document database maintained in the processor-readable storage medium 120.

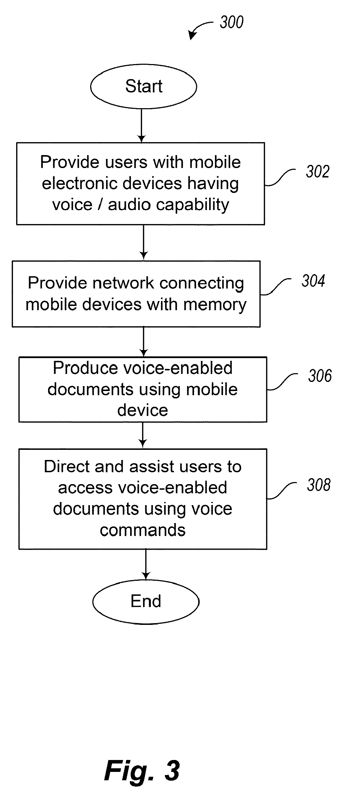

Figure 3 illustrates a method of operation 300 that can be carried out by a vendor entity 102 to allow hands-free access to information, for example, to providers 104 to facilitate access to transaction-related information. At 302 the vendor entity 102 provides mobile electronic devices to providers 104, the mobile electronic devices having voice and audio capability, and being programmed to produce and access voice-enabled documents. For example, the service can program the mobile devices with a mobile device application that is capable of a) receiving voice commands to access the voice-enabled documents, b) generating a voice-enabled document from a paper document, and c) initiating audio playback of information contained in the voice-enabled documents. The mobile device application can be developed as proprietary software by the service, third-party software that is customized or customizable to the service, or it can be a multi-purpose mobile application useful for a variety of different services. At 304, the vendor entity 102 provides a non-transitory storage medium accessible by the mobile device(s), which can be a local memory or a centralized storage medium connected to the mobile device via a network. At 306, a provider uses the mobile electronic device to produce a voice-enabled document according to a method described herein, which can be stored in the non-transitory processor-readable storage medium 120 for later access by the provider who produced the voice-enabled document or by other providers. At 308, the vendor entity 102 directs and assists service providers 104 in accessing voice-enabled documents using voice commands.

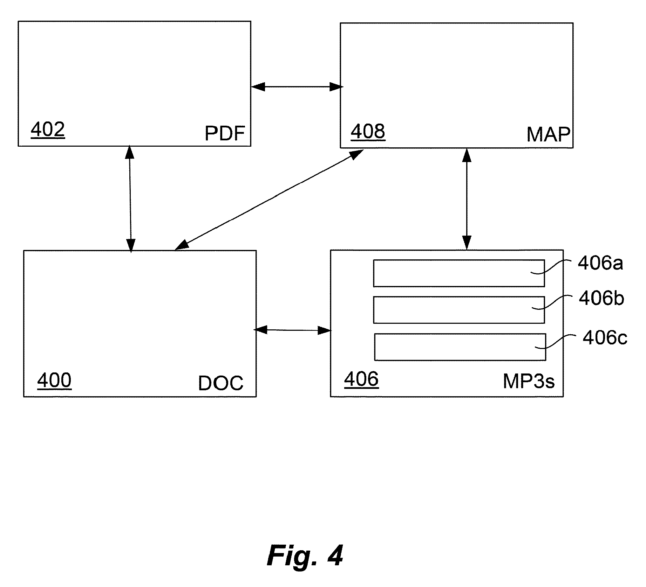

With reference to Figures 4, 5, and 6, data structures associated with a voice-enabled document 400 are shown as storing pieces of information from the document 404 in different forms. Whereas a traditional electronic document represents information in the form of text (e.g., a Word® file created using a word processing program), and optionally in the form of a image (e.g., a PDF, GIF, or TIF file), the voice-enabled document 400 is associated with additional electronic files as shown in Figure 4 to represent information in audible form as well.

Figure 4 illustrates four exemplary data structures associated with one embodiment of a voice-enabled document 400: The voice-enabled document 400 is nominally an electronic file in which text can be represented by in any variety of forms (e.g., ASCII character representations), formatting can be encoded as part of the document. The electronic document may, optionally, include embedded images, for instance in bit map or vector representation. Associated image data 402 may be in any variety of image formats, for instance PDF, GIF, or TIF, JPEG, among other possible image formats. An associated set of audio playback files 406a-406n (only three shown, collectively 406) provides audio representations of information in user selectable fields contained in the voice-enabled document 400. The audio playback files 406 may be pre-stored, for example, in a compressed audio format such as MP3. Alternatively, information, for instance text, may be converted to audible form in real-time or almost real-time, for instance in response to selection of a given user-selectable field. A logical association 408 (e.g., a mapping table) provides a link between the data structures (e.g., text data, image data 402 and audio playback files 406). The data structures 402, 406, and 408 associated with the voice-enabled document 400 can be stored separately or together in, for example, the non-transitory processor-readable storage medium 120 for access by multiple devices via the network 108. Notably, the user selectable fields may be selected via spoken or audible phrases, words or commands. In some implementations, the user selectable fields may additionally be selectable via more conventional techniques including use of a cursor or pointer and associated pointer device (e.g., mouse, trackball, track pad, joystick, thumb stick, keys) and/or touch screen.

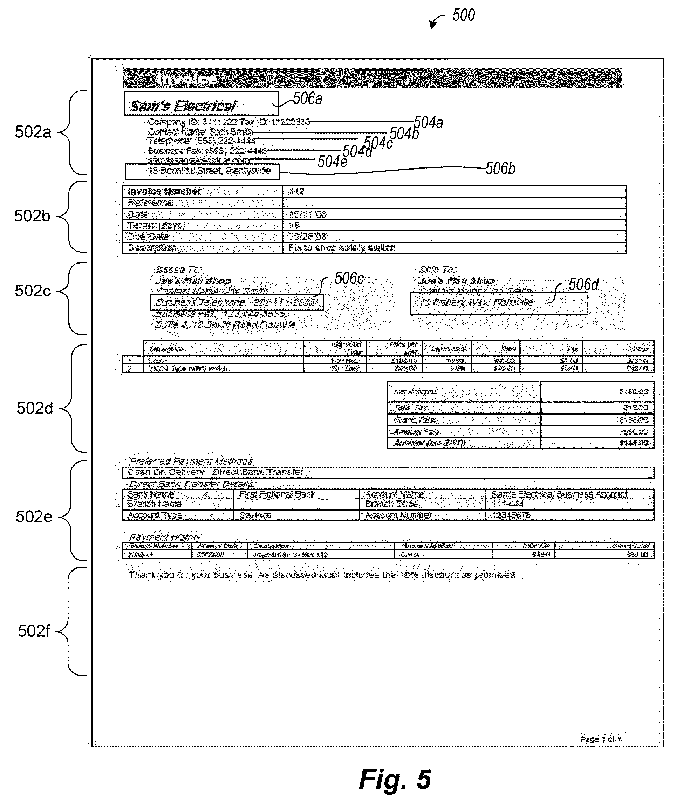

Figure 5 shows an example of an instance of a document that contains information used by a vendor. The exemplary document shown is an invoice 500 containing information about a transaction between an exemplary vendor entity 102 (e.g., Sam's Electrical) and an exemplary destination, or customer (e.g., Joe's Fish Shop) receiving a delivery via a provider 104 (e.g., an electrician providing electrical services).

Notably, the invoice may be based on a template, for example a template used by a specific vendor. The contents of the various fields of the specific instances of the invoices may vary, for instance from customer-to-customer or time-to-time. For example, the information in a field identifying the customer will be different for different customers. Also for example For example, the information in a field identifying items purchased by the customer will be different for a given customers over a number of billing cycles (e.g., month-to-month).

The invoice 500 can originate in the form of a paper invoice, or it can originate in electronic form as the document 400. The image data 402 can be derived either by scanning an original paper invoice, or by converting the document 400 (e.g., a Word® file) to an image (e.g., a PDF file). If the invoice 500 originates as a paper document, text within the document 400 can be derived from scanned associated image data 402 using character recognition software (e.g., OCR software). Thus, the data structures 402 and 400 which represent the invoice 500 are generated and saved.

The voice-enabled document 400 may be set up so that the data structures 406 and 408 may contain all or selected portions of the information available within the invoice 500, the portions identified as one or more user-selectable voice-actuatable fields. Content within these user-selectable fields can be accessible via respective voice or audible commands to produce an audible response. Some or all of these voice actuatable fields can additionally be selectable via a pointing device such as a mouse, trackball, trackpad, keyboard, stylus, and/or by touching a touch-sensitive screen. Selection of a voice actuatable user-selectable field provides an aural rendition of the content of the user-selectable field logically associated with the voice command. The aural rendition of the content of the user-selectable field can be pre-stored in the data structure 408 as a sound file, or the aural rendition can be rendered in real time by converting text within the user-selectable field into audible form.

User selectable voice actuatable fields may be defined for a given template. Then each instance of a voice enabled document (e.g., voice enabled invoice or delivery schedule) based on the template will inherit or will have the same defined user selectable voice actuatable fields and trigger phrases. Such may reduce the amount of effort dedicated to producing voice enabled documents, as well as providing consistency for the end users (e.g., delivery driver). Alternatively, user selectable voice actuatable fields may be defined on a document by document basis. Such an approach may be more practical where documents are unique, and there are not multiple instances of a given type of document.

The invoice 500, for example, includes various data blocks 502a-502n (six shown, collectively 502) pertaining to the vendor entity 102, the customer, and the transaction. Exemplary data blocks shown in the invoice 500 include a vendor contact data block 502a, an invoice data block 502b, a customer contact data block 502c, a transaction data block 502d, a payment data block 502e, and a narrative data block 502f. Each data block 502, such as the vendor contact data block 502a, includes one or more text data objects 504a - 504n (none shown, collectively 504) such as, for example, a vendor name text data object 504a, a vendor ID number text data object 504b, a vendor contact name text data object 504c, a vendor telephone text data object 504d, a vendor fax number text data object 504e, a vendor e-mail address text data object 504f, and a vendor street address text object 504g.

During production of the voice-enabled document 400 associated with the invoice 500, some or all of the text data objects 504 can be identified as user-selectable fields 506a - 506n (four shown, collectively 506). Exemplary user-selectable fields 506 are embedded fields within the invoice 500, shown as visually emphasized by a highlighted box in Figure 5, as they would appear on a display screen that displays image data representing the invoice 500. For example, within the vendor data block 502a, two text data objects have been identified and visually emphasized as user-selectable fields 506a and 506b. Within the customer contact data block 502c, a customer business telephone number text data object and a service destination address text data object have been identified and visually emphasized as user-selectable fields 506c and 506d, respectively. During production of the virtual voice-enabled document 400, the text data objects 504 that are identified as user-selectable fields 506 can be saved to the non-transitory storage medium 120 so as to be accessible in text form, audio form, or visual form, to one or more of the provider-associated processor-based devices 110 via the logical association 408.

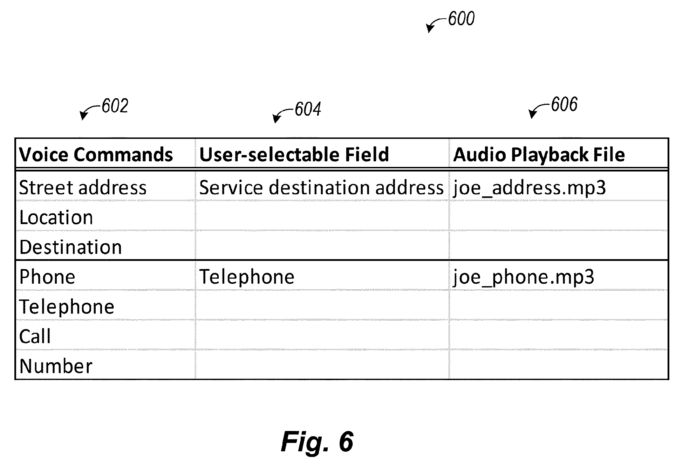

An exemplary logical association 408 that includes one or more text data objects 504 is shown in Figure 6 as a mapping table 600. The mapping table 600 includes a voice command list 602 shown in the left column, a user-selectable field list 604 shown in the center column, and an audio playback file list 606, shown in the right column. The voice command list 602 includes one or more voice commands associated with each item in the user-selectable field list 604, thus allowing multiple spoken commands to identify the same user-selectable field, and provide access to the same data object. In the example shown in Figure 6, the voice commands "street address," "location,", and "destination" all map to the service destination address user-selectable field 506d; while the voice commands "phone", "telephone", "call", and "number" all map to the customer business telephone number user-selectable field 506c. Alternatively, voice commands can indicate an ordering of playback, such as "forward," "back," "next," or "stop," which commands can use as a reference the most recent user-selectable field accessed. Identification of a particular user-selectable field, in turn, triggers playback of the associated audio playback file (e.g., 406a). Instead of a mapping table 600, a look-up table, linked list, pointer or other similar data structure may be used to embody the logical association 408 between voice commands, user-selectable fields 506, and audio playback files 406.

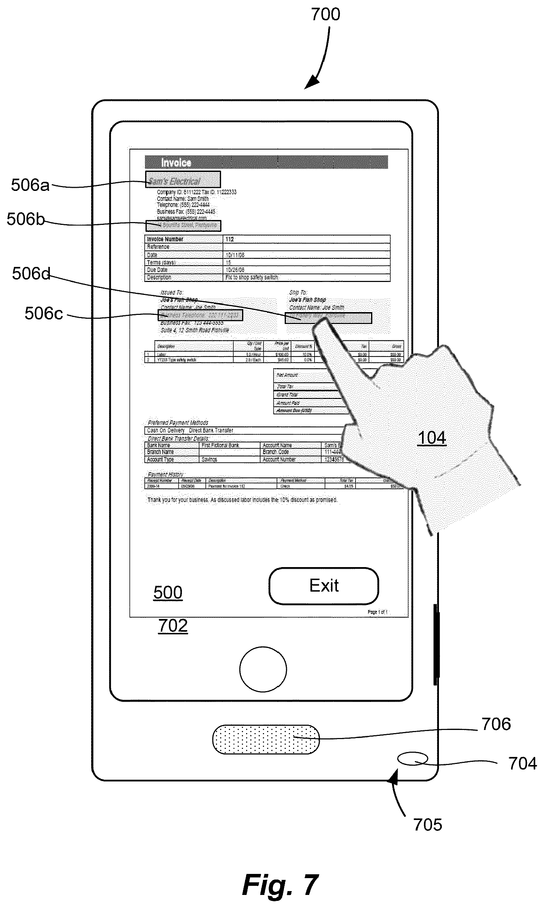

Figure 7 depicts an exemplary scenario in which a provider 104 (e.g., a delivery person) uses a voice-enabled document access system to assist in delivering a product or service to a customer. The voice-enabled document access system can include a processor-based mobile device 700 (e.g., a smart phone, tablet computer, or laptop computer) that can be selectively coupled to the non-transitory computer-readable medium 120. An exemplary processor-based mobile device 700 is equipped with an interactive mobile display screen 702, a microphone 704 (e.g., a condenser microphone), internal voice-recognition software 705 used to interpret voice commands sensed by the microphone 704, and a speaker 706, which is shown in Figure 7 as an integral speaker. Alternatively, the microphone 704 and/or the speaker 706 used to access voice-enabled documents can be separate from the processor-based mobile device 700, for example speaker components of a car stereo system can be used, to which signals can be transmitted via a short range wireless device such as a Bluetooth® device. The interactive mobile display screen 702 is preferably a touch screen that allows the provider 104 to easily access transaction information such as that within the invoice 500 by touching a highlighted region (e.g., user-selectable fields 506) of the interactive mobile display screen 702.

However, because the voice-enabled document access system features the ability to accept voice commands, availability of a touch screen is not critical. Operation of the voice-enabled document access system preferably entails the provider speaking a voice command, for example, (referring to Figure 6) "street address," included in the voice command list 602, which is then linked, by the logical association to the user selectable field "service destination address" from the user-selectable field list 604. In response, the associated audio playback file " joe_address.mp3" can be activated through the logical association to announce the address of Joe's Fish Shop without requiring either visual or tactile interaction via the interactive mobile display screen 702.

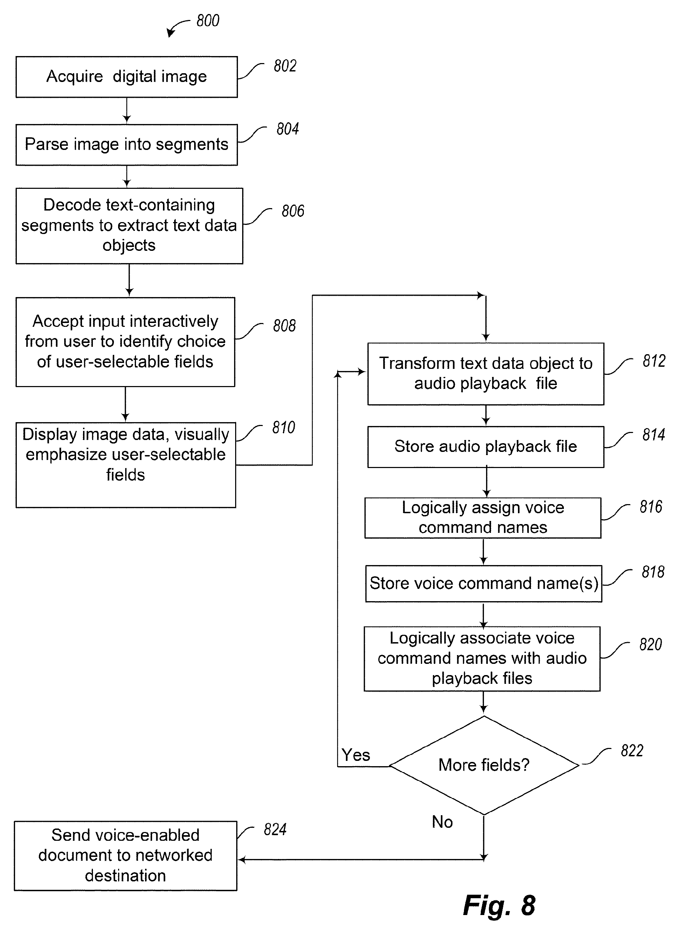

Figure 8 illustrates an exemplary method of operation 800 carried out by a processor-based system (e.g., the provider-associated processor-based device 110 in the form of the mobile device 700, or the vendor processor-based server 114, for example) during production of the voice-enabled document 400 corresponding to the invoice 500. The method of operation 800 is based on an example in which the invoice 500 originates in the form of either a paper invoice or a text document, which is transformed, through the method 800, into a voice-enabled document. At 802, a digital image data 402 of the paper invoice is acquired, for example, from the mobile device 700 which is typically equipped with a camera, or from a stand-alone camera that can supply an image to the vendor processor-based server 114. Alternatively, at 802, digital image data 402 can be acquired by converting text data 404 into an image format (e.g., PDF, JPEG, or a similar image format). At 804, the image data 402 can be parsed into segments containing either pictures or text so that at 806, text-containing segments of the image can be decoded into text data objects 504. The actions 802, 804, and 806 are sub-tasks involved in a more general action of extracting text data objects 504. The decoding step 806 may entail use of optical character recognition (OCR) techniques to create text data objects 504 from the image data 402.

Once the text data objects 504 are extracted from the invoice 500, user-selectable fields 506 can be identified from among the various text data objects 504. At 808, identification of the user-selectable fields 506 may entail accepting input interactively from a user (e.g., a provider, or a user logged into the vendor processor-based server 114) to choose which text data objects 504 to include as user-selectable fields. At 810, the image data 402 can be displayed on a display screen (e.g., the interactive mobile display screen 702), while including visual emphasis of the user-selectable fields 506, for example, by highlighting or enclosing the associated text. At 812, the text data objects 504 associated with the user-selectable fields 506 can be transformed into audio playback files by computer-enunciating the text and saving a sound recording as an audio playback files 406. Alternatively, the mobile device 700 can receive voice input from the user to enunciate the user-selectable fields 506 for storage in audio form as, for example, an MP3 file. At 814, the audio playback files 406 can be stored as audio representations of each of the user-selectable fields 506. At 816, one or more voice command names can be logically assigned to each of the user-selectable fields 506 and the voice commands can then be stored at 818 in the voice command list 602. A choice of entries in the voice command list 602 can be obtained by querying a user.

At 820, the voice command names in the voice command list 602 are logically associated with audio playback files 406 by recording the audio playback file names in the audio playback file list 606 within the mapping table 600. Recording the audio file names may take the form of assigning hyperlinks to the audio playback files. The logical association 408 thus establishes each voice command in the voice command list 602 as a trigger for initiating playback of a corresponding audio playback file 406. At 822, the actions 812-820 are repeated until all of the user-selectable fields 506 are represented by logically associated entries in the mapping table 600. Upon storage of the logical association 408 and the audio playback files 406, generation of the voice-enabled document 400 is complete. At 824, the processor-based system can optionally send some or all of the data structures of the voice-enabled document 400 to a networked destination as, for example, an e-mail message, or as one or more attachments to an e-mail message, or combinations thereof.

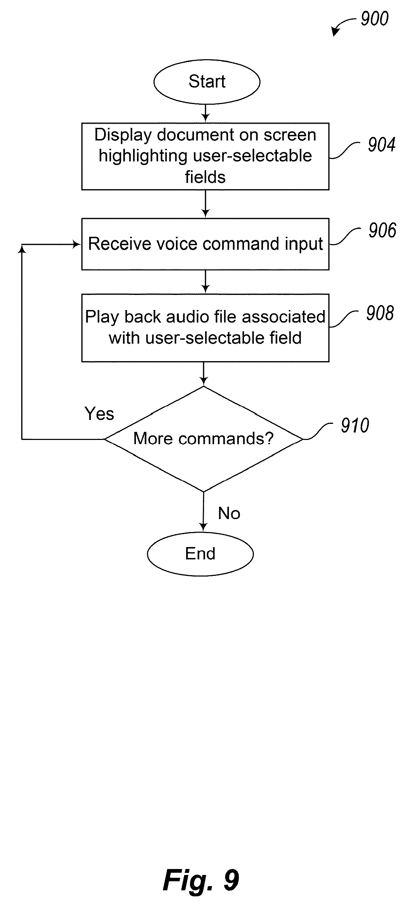

Figure 9 illustrates a method of operation 900 carried out by the voice-enabled document access system during the scenario depicted in Figure 7. In response to either voice commands or screen-based input, at 904 the access system (e.g., the mobile device 700) displays the image data 402 component of the voice-enabled document 400 on the interactive mobile display screen 702, including highlighting user-selectable fields 506. In response to a spoken voice command sensed by the microphone 704, the voice recognition software 705 supplied as part of the mobile device 700 identifies the voice command "street address" from the voice command list 602, at 906, and proceeds to consult the mapping table 600. At 908, the processor employs the mapping table 600 to logically associate the phrase or voice command "street address" with the user-selectable field "service destination address." The processor then logically associates this user-selectable field with the audio playback file "joe_address.mp3" from the playback file list 604, which triggers audible playback of Joe's address at 908. At 910, the voice recognition software 705 waits for the next spoken command and, upon receiving further spoken commands, repeats the recognition, logical association, and playback actions, 906, and 908, respectively. Although the electronic documents described herein are voice-enabled, the voice-enabled documents can be accessed using screen input as an alternative to voice input (e.g., via touch screen selection using stylus or a finger or via text input).

The foregoing detailed description has set forth various embodiments of the devices and/or processes via the use of block diagrams, schematics, and examples. Insofar as such block diagrams, schematics, and examples contain one or more functions and/or operations, it will be understood by those skilled in the art that each function and/or operation within such block diagrams, flowcharts, or examples can be implemented, individually and/or collectively, by a wide range of hardware, software, firmware, or virtually any combination thereof. In one embodiment, the present subject matter may be implemented via application-specific integrated circuits (ASICs). However, those skilled in the art will recognize that the embodiments disclosed herein, in whole or in part, can be equivalently implemented in standard integrated circuits, as one or more computer programs running on one or more computers (e.g., as one or more programs running on one or more computer systems), as one or more programs running on one or more controllers (e.g., microcontrollers) as one or more programs running on one or more processors (e.g., microprocessors), as firmware, or as virtually any combination thereof, and that designing the circuitry and/or writing the code for the software and or firmware would be well within the skill of one of ordinary skill in the art in light of this disclosure.

Those of skill in the art will recognize that many of the methods or algorithms set out herein may employ additional acts, may omit some acts, and/or may execute acts in a different order than specified.

In addition, those skilled in the art will appreciate that the mechanisms taught herein are capable of being distributed as a program product in a variety of forms, and that an illustrative embodiment applies equally regardless of the particular type of non-transitory signal bearing media used to actually carry out the distribution. Examples of signal bearing media include, but are not limited to, the following: recordable type media such as floppy disks, hard disk drives, CD ROMs, digital tape, and computer medium.

The various embodiments described above can be combined to provide further embodiments. To the extent that they are not inconsistent with the specific teachings and definitions herein, all of the U.S. patents, U.S. patent application publications, U.S. patent applications, foreign patents, foreign patent applications and non-patent publications referred to in this specification are incorporated herein by reference, in their entirety. Aspects of the embodiments can be modified, if necessary, to employ systems, circuits and concepts of the various patents, applications and publications to provide yet further embodiments.

These and other changes can be made to the embodiments in light of the above-detailed description. In general, in the following claims, the terms used should not be construed to limit the claims to the specific embodiments disclosed in the specification and the claims, but should be construed to include all possible embodiments along with the full scope of equivalents to which such claims are entitled. Accordingly, the claims are not limited by the disclosure

## Claims

1. A method of producing voice-enabled documents using a processor-based mobile computing system, including at least one processor and at least one non-transitory processor-readable medium communicatively coupled to the at least one processor, the method comprising:
- acquiring a digital image of a document;
- parsing digital image data associated with the digital image into segments;
- decoding text-containing segments of the image data to extract a number of text data objects;
- accepting input interactively from a user;
- identifying at least one of the extracted text data objects as user-selectable field;
- displaying the image data on a display screen and visually emphasizing the user-selectable fields; and
- for each user-selectable field:
-- transforming the text data object of the respective user-selectable field to an audio playback file, by the at least one processor;
-- storing the audio playback file to the at least one non-transitory processor-readable medium;
-- storing at least one voice command name for the respective user-selectable field to the at least one non-transitory processor-readable medium;
-- logically associating the at least one voice command name for the respective user-selectable field as a trigger with the audio playback file for the respective user-selectable field, by the at least one processor.

2. The method according to claim 1 wherein the processor-based mobile computing system includes one or more of a smart phone, a tablet computer, or a laptop computer, and the input from a user includes a voice input.

3. The method according to claim 1 or 2, further comprising sending the voice enabled document to a networked destination.

4. The method according to one of claims 1 to 3, wherein the decoding uses optical character recognition (OCR) techniques.

5. The method according to one of claims 1 to 4, wherein the logically associating the at least one voice command name for the user-selectable field includes assigning hyperlinks to the audio playback file.

6. A method of accessing information in a voice-enabled document, using a processor-based system, including at least one processor and at least one non-transitory processor-readable medium communicatively coupled to the at least one processor, the method comprising:
- causing an image of at least a part of a digital image of the voice-enabled document to appear on a display screen, the voice-enabled document including a number of user-selectable fields;
- receiving a voice command input by the at least one processor, the voice command input is indicative of a selection of one of the user-selectable fields; and
- initiating a playback of an audio playback file logically associated with the selected user-selectable field, by the at least one processor.

7. The method according to claim 6, further comprising interrupting the playback of the audio playback file and receiving a new voice command indicative of a same or different user-selectable field.

8. The method according to claim 6 or 7, further comprising detecting a user touching the user-selectable fields on a touch screen.

9. The method according to one of claims 6 to 8, wherein the initiating playback of the audio playback file includes initiating playback of an MP3 file using an MP3 player.

10. A system for producing voice-enabled documents, the system comprising:
- a non-transitory processor-readable medium comprising data structures associated with voice-enabled electronic documents, wherein the data structures include:
-- image data representing the voice-enabled electronic document for display on an electronic display screen;
-- at least one voice command name associated with each of a plurality of embedded document fields; and
-- a logical association between each voice command name and an audio data file, such that voice recognition of a voice command name triggers an audible presentation of the logically associated audio data file;
- a digital camera that captures an image of a document and stores associated image data in the non-transitory processor-readable medium;
- at least one processor programmed to extract text data objects from the image, and to produce corresponding audio data files for storage in the non-transitory processor-readable medium;
- a display that presents the text data objects as user-selectable fields;
- a microphone, the display being responsive to voice commands received via the microphone;
- at least one audio speaker that receives input from the audio player; and
- a logical association generator that logically assigns one or more voice command names to each user-selectable field, and further associates the voice command names with corresponding audio data files.

11. The system according to claim 10, wherein the user-selectable fields are implemented as electronic hyperlinks within the voice-enabled document on the display.

12. The system according to claim 10 or 11, wherein the processor includes a parsing unit that decodes the image data into parsed segments; and an optical character recognition (OCR) unit programmed to transform data within text-containing segments of the image into text data objects.

13. The system according to claim 12, wherein the text data objects are interactively selected by a user.

14. The system according to claim 11, wherein selection of a hyperlink activates playback of an audio file.

15. The method according to one of claims 10 to 14, wherein voice-enabled documents include one or more of checklist procedures or recipes.
